# EUROPÄISCHE PATENTANMELDUNG

(11) **EP 0 555 525 A1**
(43) Veröffentlichungstag der Anmeldung: **18.08.1993**
(21) Anmeldenummer: 92117601.2
(22) Anmeldetag: 15.10.1992
(51) Int. Cl.: B01D 53/36

(54) **Verfahren zur Minderung der Stickoxidkonzentration in Verbrennungsabgasen unter Zugabe einer wässrigen Harnstofflösung**

(30) Priorität: 17.12.1991 DE 4141581
(71) Anmelder: DIDIER-WERKE AG, D-65189 Wiesbaden (DE)
(72) Erfinder: Hommen, Alexander, W-6551 Hargesheim (DE); Max, Arnold, W-4250 Bottrop (DE); Schnelle, Wilfried, Dr., W-4787 Geseke 4 (DE); Schütz, Wilfried, Dr., W-2900 Oldenburg (DE); Muders, Herbert, W-6200 Wiesbaden (DE)
(74) Vertreter: Brückner, Raimund

(57) **Zusammenfassung**

Die Erfindung betrifft ein Verfahren zur Minderung der Stickoxidkonzentration in Verbrennungsabgasen unter Zugabe einer wässrigen Harnstofflösung zu den heißen Abgasen unter Freisetzung von NH₃ und Reaktion des freigesetzten NH₃ mit den Stickoxiden an einem Katalysator.

Bei dem erfindungsgemäßen Verfahren wird eine wässrige Harnstofflösung in den heißen Abgasstrom unter Bildung von Tröpfchen mit einer mittleren Größe unterhalb von 400 µm eingegeben.

## Beschreibung

Die Erfindung betrifft ein Verfahren zur Minderung der Stickoxidkonzentration in Verbrennungsabgasen unter Zugabe einer wässrigen Harnstofflösung zu den heißen Abgasen unter Freisetzung von NH₃ und Reaktion des freigesetzten NH₃ mit den Stickoxiden an einem Katalysator.

Die Verwendung von Harnstoff zur Beseitigung von Stickoxiden in Verbrennungsabgasen ist an sich bekannt. Hierbei unterscheidet man sogenannte Naßverfahren oder Trockenverfahren. Bei Naßverfahren, wie es z.B. in der DE 24 42 828 C2 beschrieben ist, wird eine Harnstofflösung mit den abgekühlten Abgasen bei Temperaturen zwischen Umgebungstemperaturen und Siedepunkt der Behandlungslösung in Kontakt gebracht. Bei Trockenverfahren wird in die heißen Abgase eine Harnstofflösung injiziert. Ein solches Verfahren ist in der US-PS 4 325 924 beschrieben, bei welchem eine Harnstofflösung bei Temperaturen der Abgase oberhalb von 1038°C injiziert wird. Hierbei wird jedoch kein Katalysator verwendet. In der DE 38 30 045 A1 ist ebenfalls ein sogenanntes Trockenverfahren zur Reduktion von in Abgasen enthaltenden Stickoxiden mittels eines zeolithhaltigen Katalysators beschrieben, wobei dem Abgas als Reduktionsmittel Harnstoff zugegeben wird. Dieser Harnstoff kann in Form einer wässrigen Harnstofflösung vorliegen, wobei er jedoch erst nach seiner Zersetzung (gegebenenfalls durch eine Heizeinrichtung) mittels einer Zuführvorrichtung in den Abgasstrom gefördert wird.

Nachteilig bei solchen Verfahrensweisen ist es, daß der Harnstoff entweder vor der Eingabe in den Abgasstrom zersetzt wird oder daß die Harnstofflösung beim Einspritzen in einen heißen Abgasstrom nicht vollständig zersetzt wird und Polymerisate bildet.

Aufgabe der vorliegenden Erfindung ist ein Verfahren der zuvor beschriebenen Gattung, bei welchem eine über lange Zeiträume konstante und sichere Minderung der Stickoxidkonzentration in Verbrennungsabgasen möglich ist und die Bildung von Polymerisaten aus dem Harnstoff verhindert oder zumindest möglichst weit eingeschränkt wird. Es wurde nämlich gefunden, daß aus Harnstoff gebildete Polymerisate eine exakte Steuerung der Verminderung der Stickoxide schwierig machen oder verhindern.

Zur Lösung dieser Aufgabe dient das erfindungsgemäße Verfahren der zuvor beschriebenen Art, welches dadurch gekennzeichnet ist, daß die wässrige Harnstofflösung in den heißen Abgasstrom unter Bildung von Tröpfchen mit einer mittleren Größe unterhalb von 400 µm eingegeben wird.

Vorteilhafte Ausführungsformen des Verfahren sind in den Ansprüchen 2 bis 7 näher beschrieben.

Bei dem erfindungsgemäßen Verfahren wird eine schnelle Aufheizung der wässrigen Harnstofflösung erreicht, d.h. der Temperaturbereich von ca. 100°C bis 250°C wird in möglichst kurzer Zeit durchlaufen, so daß die Bildung von unerwünschten Polymerisaten aus dem Harnstoff in der Lösung vermieden wird.

Durch die Bildung der feinen Tröpfchen mit einer mittleren Tröpfchengröße unterhalb von 400 µm und vorteilhafterweise einer Maximalgröße der Tröpfchen unterhalb von 200 µm erfolgt ein Durchlaufen des Temperaturintervalls von 100°C bis 250°C innerhalb sehr kurzer Zeiten, z.B. innerhalb von 0,1 bis 1 sec, wobei der Harnstoff ab dieser Temperatur dann in NH₃, Cyansäure und Isocyansäure, welche sämtlich als Reduktionsmittel wirken, zerfällt und die Bildung von Polymerisaten weitestgehend vermieden wird.

Bei dem erfindungsgemäßen Verfahren kann die Zerstäubung der Harnstofflösung unter Bildung von Tröpfchen der angegebenen Größen prinzipiell auf zwei Wegen erreicht werden, d.h. einmal durch eine Hochdruckzerstäubung oder Ultraschallzerstäubung aus einer geeigneten, üblicherweise gekühlten Düse oder besonders bevorzugt mittels einer Zweistoffdüse, d.h. einer Düse, in welcher die Harnstofflösung mittels Druckgas zerstäubt wird. Die Verwendung einer solchen Zweistoffdüse ist insbesondere zur Bildung von Tröpfchen mit einer Maximalgröße unterhalb von 200 µm vorteilhaft.

Die Verwendung einer Zweistoffdüse hat noch den weiteren Vorteil, daß durch die Kühlwirkung des Gases verhindert werden kann, daß die Harnstofflösung schon in der Düse auf Temperaturen oberhalb von 100°C erhitzt wird, so daß eine Polymerisation in stärkerem Ausmaß zu befürchten wäre. Weiterhin kann das Gas auch als Kühlmedium für die Zweistoffdüse - und selbstverständlich die Zuführungsleitung, soweit diese vom Abgasstrom erwärmt werden kann - benutzt werden. Üblicherweise wird als Druckgas Luft verwendet.

Vorteilhafterweise wird zur Gewährleistung einer Tropfengröße von unterhalb 200 µm der Flüssigkeitsstrom, d.h. die Zufuhrrate der Harnstofflösung, während des Betriebes konstant gehalten, wobei die notwendige Regelung der Reduktionsmittelmenge (in Abhängigkeit von der Stickoxidkonzentration in den Abgasen) über die Harnstoffkonzentration der Lösung erfolgt, d.h. die Zumischung von Wasser zu der Harnstofflösung, um eine Absenkung der Harnstoffkonzentration zu erreichen.

Bei dem erfindungsgemäßen Verfahren ist es daher vorteilhaft, daß die Bildung der Tröpfchen der Harnstofflösung praktisch abgeschlossen ist, bevor diese eine Temperatur von 100°C überschritten haben, so daß die eingedüsten Tröpfchen mit einer Temperatur unterhalb 100°C wegen ihrer geringen Größe im Abgasstrom sehr rasch erhitzt werden.

Bei dem erfindungsgemäßen Verfahren ist es weiterhin vorteilhaft, daß das Eingeben der Tröpfchen der Harnstofflösung, d.h. das Eindüsen, möglichst weit vor dem verwendeten Katalysator erfolgt, so daß die Harnstofftröpfchen nicht unmittelbar nach ihrer Bildung auf Flächen auftreffen. Dasselbe gilt für das Aufprallen auf sonstige Flächen der Apparatur, d.h. die Tröpfchen der Harnstofflösung sollen frühestens nach 0,3 sec einen Kontakt mit den Katalysatoroberflächen haben, vorteilhafterweise erst nach 1,0 sec. Bei einer Rauchgasgeschwindigkeit von z.B. 30 m/sec und einer Aufheizzeit von einer Temperatur unterhalb von 100°C bis zu einer Temperatur von 250°C von z.B. 0,1 bis 1 sec muß daher das Eindüsen der Harnstofflösung in einer Entfernung von 3 bis 30 m vor dem Erreichen des Katalysators erfolgen. Ansonsten bestünde die Gefahr, daß sich zu große Tropfen bilden, welche nicht schnell genug durch das heiße Abgas aufgeheizt werden.

Bei dem erfindungsgemäßen Verfahren können an und für sich beliebige Katalysatoren verwendet werden, welche die Denitrifikation katalysieren. Bevorzugt werden jedoch sogenannte Denox-Katalysatoren auf Basis von Metalloxiden verwendet, wie sie z.B. in der DE 38 10 761 A1, DE 37 27 119 A1 und der DE 35 44 913 A1 beschrieben sind.

Das erfindungsgemäße Verfahren wird vorteilhafterweise bei einer Temperatur der Abgase von 300°C bis 600°C durchgeführt, wobei die Temperatur der Abgase weitgehend von der Art und dem wirksamen Temperaturbereich des verwendeten Katalysators abhängig ist.

In der Zeichnung sind schematisch die Ergebnisse von Versuchen wiedergegeben, bei welchen ein Abgas mit einer NOₓ-Eingangskonzentration von 670 ppm an einem Denox-Katalysator unter Eindüsung einer Harnstofflösung behandelt wurden.

Die Darstellung zeigt schematisch die auf einem Schreiber aufgezeichnete Eingangskonzentration für NOₓ und die Ausgangskonzentration für NOₓ nach der Behandlung an dem Katalysator, wobei ein NOₓ-Sollwert von 100 ppm eingehalten werden sollte.

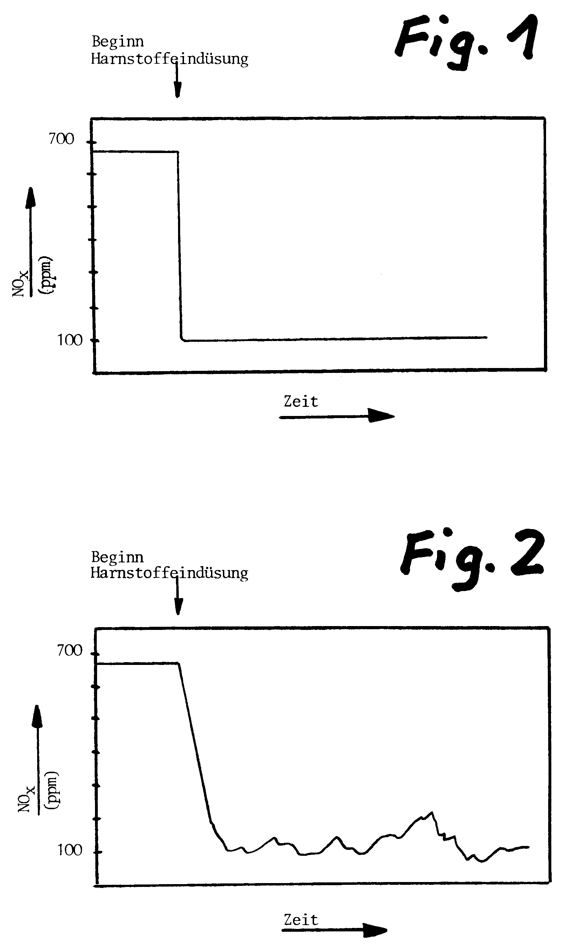

Die Figur 1 zeigt die Ergebnisse des erfindungsgemäßen Verfahrens unter Verwendung einer Zweistoffdüse bei einer Tröpfchengröße der Harnstofflösung von maximal 200 µm. Hieraus ist ersichtlich, daß der Sollwert von 100 ppm unmittelbar nach Beginn der Zugabe der Harnstofflösung erreicht wird und lediglich minimal schwankte.

In der Figur 2 sind die Ergebnisse schematisch wiedergegeben, welche bei Wiederholung unter sonst identischen Bedingungen erzielt wurden, wobei hier jedoch keine Zweistoffdüse, sondern eine relativ große Tropfen bildende Einstoffdüse verwendet wurde, d.h. keine Tröpfchen mit einer mittleren Größe unterhalb von 400 µm. Bei dieser Verfahrensweise stellte sich der NOₓ-Wert nach dem Katalysator erst nach ca. 10 min in etwa auf den Sollwert von 100 ppm ein und zappelte dann andauernd im Bereich zwischen 70 und 200 ppm, d.h. die Einhaltung eines Sollwerts von maximal 100 ppm konnte nicht auf Dauer erreicht werden.

## Patentansprüche

1. Verfahren zur Minderung der Stickoxidkonzentration in Verbrennungsabgasen unter Zugabe einer wässrigen Harnstofflösung zu den heißen Abgasen unter Freisetzung von NH₃ und Reaktion des freigesetzten NH₃ mit den Stickoxiden an einem Katalysator,
dadurch gekennzeichnet,
daß die wässrige Harnstofflösung in den heißen Abgasstrom unter Bildung von Tröpfchen mit einer mittleren Größe unterhalb von 400 µm eingegeben wird.

2. Verfahren nach Anspruch 1,
dadurch gekennzeichnet,
daß die Bildung der Tröpfchen der wässrigen Harnstofflösung durch Zerstäuben in einer Zweistoffdüse unter Anwendung von Gas als Zerstäubungsmedium erfolgt.

3. Verfahren nach einem der Ansprüche 1 oder 2,
dadurch gekennzeichnet,
daß die Tröpfchen der wässrigen Harnstofflösung so in den Abgasstrom eingegeben werden, daß ein Kontakt mit den Katalysatoroberflächen erst nach mindestens 0,3 sec erfolgt.

4. Verfahren nach einem der vorhergehenden Ansprüche,
dadurch gekennzeichnet,
daß die Harnstofflösung als Tröpfchen mit einer Größe unterhalb von 200 µm eingegeben wird.

5. Verfahren nach einem der vorhergehenden Ansprüche,
dadurch gekennzeichnet,
daß als Katalysator ein Metalloxide enthaltender Katalysator verwendet wird.

6. Verfahren nach einem der vorhergehenden Ansprüche,
dadurch gekennzeichnet,
daß es bei einer Temperatur der Abgase von 300 bis 600°C durchgeführt wird.

7. Verfahren nach einem der vorhergehenden Ansprüche,
dadurch gekennzeichnet,
daß die Bildung der Tröpfchen der Harnstofflösung praktisch abgeschlossen ist, bevor diese eine Temperatur von 100°C überschritten haben.
